# FASCICULE DE BREVET EUROPEEN

(11) **EP 2 867 069 B1**
(45) Date de publication et mention de la délivrance du brevet: **08.01.2020**
(21) Numéro de dépôt: 13744594.6
(22) Date de dépôt: 19.06.2013
(51) Int. Cl.: B60R 16/023, B60R 16/03, H02J 1/08

(54) **ORGANE ÉLECTRIQUE À ALIMENTATION REDONDANTE ET À MOYENS DE PROTECTION ANTI-SURINTENSITÉ ET DIODE COUPLÉS À SES PRISES DE MASSE**
ELEKTRISCHER KÖRPER MIT EINER REDUNDANTEN STROMVERSORGUNG SOWIE MIT ÜBERSTROMSCHUTZ UND EINER AN DIE ERDKONTAKTE DAVON GEKOPPELTEN DIODE
ELECTRIC BODY WITH A REDUNDANT POWER SUPPLY AND ANTI-OVERCURRENT PROTECTION MEANS AND A DIODE THAT ARE COUPLED TO THE GROUND CONTACTS THEREOF

(30) Priorité: 28.06.2012 FR 1256169
(43) Date de publication de la demande: 06.05.2015
(73) Titulaire: PSA Automobiles SA, 78300 Poissy (FR)
(72) Inventeur: DHAINAUT, Jean Marc, F-75007 Paris (FR)
(74) Mandataire: Jeannin, Laurent Jean-Pierre
(86) Numéro de dépôt international: PCT/FR2013/051428
(87) Numéro de publication internationale: WO 2014/001689

(56) Documents cités:
- EP-A1- 1 759 929
- WO-A1-2011/114032
- FR-A1- 2 911 731
- US-A1- 2008 224 539
- US-A1- 2009 316 320
- US-A1- 2010 109 430

## Description

L'invention concerne l'alimentation électrique d'organes électriques.

Dans certains domaines, comme par exemple celui des véhicules, éventuellement de type automobile, certains organes électriques sont connectés à un circuit d'alimentation qui leur assure une alimentation positive et une alimentation négative (ou masse).

L'alimentation positive est généralement réalisée par un conducteur électrique qui est protégé par un fusible et relié aux bornes positives d'une première source d'énergie électrique (comme par exemple une batterie) et d'une seconde source d'énergie électrique (comme par exemple un alternateur), soit directement (dans le cas d'une alimentation permanente), soit au travers d'un commutateur (dans le cas d'une alimentation commutée).

L'alimentation négative (ou masse) est généralement réalisée par un conducteur électrique qui est relié à une structure ou pièce métallique (comme par exemple la carrosserie (ou caisse) d'un véhicule) par une prise de masse constituée d'une cosse sertie sur le conducteur électrique et d'une liaison vissée. La structure ou pièce métallique est elle-même reliée aux bornes négatives des première et seconde sources d'énergie électrique par d'autres prises de masse.

Le nombre de prises de masse sur la structure ou pièce métallique étant limité de manière à répondre à des contraintes d'implantation et de montage, une même prise de masse est généralement partagée entre plusieurs organes électriques (par exemple entre des calculateurs ou entre des calculateurs, capteurs et actionneurs) par l'intermédiaire d'une liaison équipotentielle (via une épissure, une superposition de cosses ou un connecteur).

Les alimentations négatives, réalisées par l'intermédiaire de prises de masse vissées sur une structure ou pièce métallique (comme par exemple une caisse), sont généralement les points faibles du circuit d'alimentation électrique. Cela résulte notamment du fait que la qualité d'une liaison vissée est plus difficile à assurer que celle d'une liaison par connecteurs enfichés dans les conditions de montage en grande série (dans lesquelles les opérateurs ne sont pas spécialisés dans le domaine électrique et le temps alloué aux opérations d'assemblage est réduit).

La perte de l'alimentation d'un organe électrique pilotant au moins une fonction de sécurité peut conduire à des évènements dangereux. C'est par exemple le cas d'organes électriques tels que les calculateurs qui interviennent dans la chaîne de contrôle du démarrage du moteur thermique d'un véhicule (éventuellement de type hybride). Pour ce type d'organes électriques, on peut réaliser une redondance d'alimentation de manière à limiter les risques de perte d'alimentation (positive ou négative). Cette redondance d'alimentation doit prendre en compte certaines contraintes afin, notamment, d'éviter les risques de surintensité ou de court-circuit par recirculation de courant lors de la perte d'une masse, et/ou de supporter des impulsions de démarrage (par exemple d'un moteur thermique) pendant lesquelles la tension d'alimentation descend très bas.

Plusieurs alimentations redondantes ont été proposées.

Ainsi, on peut réaliser un câblage en parallèle des première et seconde sources d'énergie électrique, avec des connexions séparées à la fois du côté positif sur le boîtier contenant les fusibles et du côté négatif sur la structure (ou pièce) métallique de mise à la masse. Cela permet de réaliser une « pseudo redondance » de l'alimentation générale d'un véhicule lorsque celui-ci est dans une phase de roulage. En effet, en cas de perte de la liaison avec la première source d'énergie électrique (par exemple la batterie), du côté de la borne positive ou du côté de la borne négative, la seconde source d'énergie électrique (par exemple l'alternateur) peut fournir l'énergie aux organes électriques, sauf dans le cas d'appels de courant trop importants pour lesquels on a une baisse de la tension.

On peut également, d'une part, alimenter l'organe électrique au moyen de deux fils d'alimentation positive issus respectivement de deux fusibles, couplés respectivement aux première et seconde sources d'énergie électrique, et de deux fils d'alimentation négative issus respectivement de deux prises de masse solidarisées à la structure (ou pièce) métallique, d'une deuxième part, réaliser à l'intérieur de l'organe électrique des fonctions logiques de type « ou » (par exemple avec des diodes) du côté des alimentations positives et du côté des alimentations négatives, et, d'une troisième part, disposer des entrées de diagnostic sur le microcontrôleur de l'organe électrique afin de détecter la perte d'une alimentation positive ou négative et la signaler à l'usager par un moyen approprié (comme par exemple un signal lumineux ou un message affiché sur un écran).

L'inconvénient d'une telle solution d'alimentation redondante complète réside dans le fait que la mise en série de diodes pour réaliser les fonctions de type « ou » du côté des alimentations positives et du côté des alimentations négatives génère une chute de tension non négligeable (typiquement 0,6 V à 0,8 V par diode, soit une chute de tension globale d'environ 1,2 V à 1,6 V) qui peut s'avérer gênante dans certaines phases (comme par exemple les phases de démarrage d'un moteur thermique), notamment en présence de températures basses. Par exemple, une telle chute peut provoquer un remise à zéro (ou « reset ») d'un calculateur.

On peut également, d'une part, alimenter l'organe électrique au moyen de deux fils d'alimentation positive issus respectivement de deux fusibles, couplés respectivement aux première et seconde sources d'énergie électrique, et de deux fils d'alimentation négative issus respectivement de deux prises de masse solidarisées à la structure (ou pièce) métallique, d'une deuxième part, réaliser à l'intérieur de l'organe électrique des fonctions logiques de type « ou » (par exemple avec des diodes) du côté des alimentations positives et une simple équipotentielle du côté des alimentations négatives, et, d'une troisième part, disposer des entrées de diagnostic sur le microcontrôleur de l'organe électrique afin de détecter la perte d'une alimentation positive et la signaler à l'usager par un moyen approprié (comme par exemple un signal lumineux ou un message affiché sur un écran).

Cette solution d'alimentation redondante complète présente l'avantage par rapport à la solution précédente de générer une plus faible chute de tension, du fait que l'on n'a qu'une seule diode en série dans le circuit d'alimentation (laquelle est par ailleurs généralement présente dans un calculateur pour assurer sa protection en cas d'inversion de la batterie). Hélas, elle présente plusieurs inconvénients. En effet, la perte de l'une des deux masses ne peut pas être diagnostiquée, et, lorsque plusieurs organes électriques sont alimentés par les deux liaisons de masse d'un premier organe électrique via des épissures, la perte de l'une de ces liaisons de masse en aval d'une épissure provoque une réalimentation des autres organes électriques par l'autre liaison de masse au travers de l'équipotentielle de masse du premier organe électrique, et peut, si ces autres organes électriques ont une consommation trop importante, provoquer une destruction de cette équipotentielle, qui peut elle-même provoquer un incendie du premier organe électrique.

L'invention a donc notamment pour but de proposer une solution alternative d'alimentation redondante propre à améliorer la situation.

Elle propose à cet effet un organe électrique comprenant :
- une unité de calcul comportant un point d'alimentation positive et un point d'alimentation négative, et des première et seconde bornes d'alimentation positive propres à être couplées à des fusibles couplés à des première et seconde sources d'énergie électrique également couplées à une pièce qui définit une masse électrique,
- des première et seconde bornes d'alimentation négative propres à être couplées séparément à la pièce,
- des moyens de couplage définissant une fonction logique de type « ou » entre les première et seconde bornes d'alimentation positive et le point d'alimentation positive,
- des premiers moyens de diagnostic couplant les première et seconde bornes d'alimentation positive à des première et seconde bornes de diagnostic d'alimentation positive de l'unité de calcul,
- une diode couplant le point d'alimentation négative et la seconde borne d'alimentation négative,
- des moyens de protection assurant un couplage entre le point d'alimentation négative et la première borne d'alimentation négative et agencés pour protéger contre une surintensité la diode et un circuit de l'unité de calcul qui est couplé au point d'alimentation négative, et
- des seconds moyens de diagnostic couplant la seconde borne d'alimentation négative à une borne de diagnostic d'alimentation négative de l'unité de calcul.

Grâce à l'invention, l'organe électrique dispose d'une redondance d'alimentation qui suffit à répondre aux besoins minimaux en termes de tenue à certaines tensions (comme par exemple la tension de démarrage d'un moteur thermique), et qui permet d'effectuer de nombreux diagnostics.

L'organe électrique selon l'invention peut comporter d'autres caractéristiques qui peuvent être prises séparément ou en combinaison, et notamment :
- ses moyens de protection peuvent être choisis parmi (au moins) un fusible, un transistor à commande électronique d'ouverture couplée à l'unité de calcul, un disjoncteur thermique, un disjoncteur électronique passif et à usages multiples (par exemple de type polyswitch®), et un relais bistable à commande électronique d'ouverture couplée à l'unité de calcul ;
- ses moyens de couplage peuvent comporter des diodes définissant la fonction logique de type « ou » ;
- les différentes diodes peuvent être de type Schottky ;
- ses premiers moyens de diagnostic peuvent comprendre un premier pont diviseur couplant la première borne d'alimentation positive à la première borne de diagnostic d'alimentation positive et au point d'alimentation négative, et un second pont diviseur couplant la seconde borne d'alimentation positive à la seconde borne de diagnostic d'alimentation positive et au point d'alimentation négative ;
   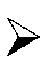 ses premiers moyens de diagnostic peuvent comprendre un premier moyen de commutation comprenant une commande électronique d'ouverture couplée à l'unité de calcul, une première borne couplée au point d'alimentation négative, et une seconde borne couplée aux premier et second ponts diviseurs afin de les alimenter de façon contrôlée ;
- il peut comprendre des moyens de régulation couplés aux point d'alimentation positive et point d'alimentation négative et propres à délivrer une tension choisie sur une sortie. Dans ce cas, ses seconds moyens de diagnostic peuvent comprendre, d'une part, un second moyen de commutation comprenant une commande électronique d'ouverture couplée à l'unité de calcul, une première borne couplée à cette sortie, et une seconde borne, et, d'autre part, un pont diviseur alimenté de façon contrôlée via la seconde borne du second moyen de commutation et couplant la seconde borne d'alimentation négative à la borne de diagnostic d'alimentation négative ;
- il peut comprendre une troisième borne d'alimentation positive propre à être couplée à un autre fusible qui est également couplé aux première et seconde sources d'énergie électrique, un moyen de commutation de puissance comprenant une commande électronique couplée à l'unité de calcul, une première borne couplée à la troisième borne d'alimentation positive, une deuxième borne couplée à la seconde borne d'alimentation négative, et une troisième borne propre à être couplée à au moins un autre organe électrique.

L'invention propose également un véhicule, éventuellement de type automobile, et comprenant une pièce définissant une masse électrique, des première et seconde sources d'énergie électrique couplées à cette pièce et à des fusibles, et au moins un organe électrique du type de celui présenté ci-avant et couplé aux fusibles et à la pièce.

D'autres caractéristiques et avantages de l'invention apparaîtront à l'examen de la description détaillée ci-après, et des dessins annexés, sur lesquels :
- la figure 1 illustre schématiquement et fonctionnellement un premier exemple d'organe électrique selon l'invention, couplé électriquement à la caisse et à des première et seconde sources d'énergie électrique d'un véhicule,
- la figure 2 illustre schématiquement et fonctionnellement un deuxième exemple d'organe électrique selon l'invention, couplé électriquement à la caisse et à des première et seconde sources d'énergie électrique d'un véhicule, et
- la figure 3 illustre schématiquement et fonctionnellement un troisième exemple d'organe électrique selon l'invention, couplé électriquement à la caisse et à des première et seconde sources d'énergie électrique d'un véhicule.

L'invention a notamment pour but de proposer un organe électrique OE destiné à être couplé électriquement, via un circuit d'alimentation redondante, à une pièce PM définissant une masse électrique et à des première S1 et seconde S2 sources d'énergie électrique également couplées à cette pièce PM.

Dans ce qui suit, on considère, à titre d'exemple non limitatif, que la pièce PM et les première S1 et seconde S2 sources d'énergie électrique font partie d'un véhicule, éventuellement de type automobile, et éventuellement de type hybride (c'est-à-dire à moteur thermique et moteur (ou machine) électrique). Mais, l'invention n'est pas limitée à cette application.

Par ailleurs, on considère dans ce qui suit, à titre d'exemple non limitatif, que la pièce PM est la carrosserie ou la caisse du véhicule. Mais, l'invention n'est pas limitée à ce type de pièce. Elle concerne en effet tout type de pièce métallique pouvant définir une masse électrique.

Enfin, on considère dans ce qui suit, à titre d'exemple non limitatif, que l'organe électrique OE est un calculateur destiné à piloter au moins une fonction de sécurité au sein d'un véhicule. Il s'agit par exemple d'un calculateur intervenant dans la chaîne de contrôle du démarrage du moteur thermique d'un véhicule (éventuellement de type hybride).

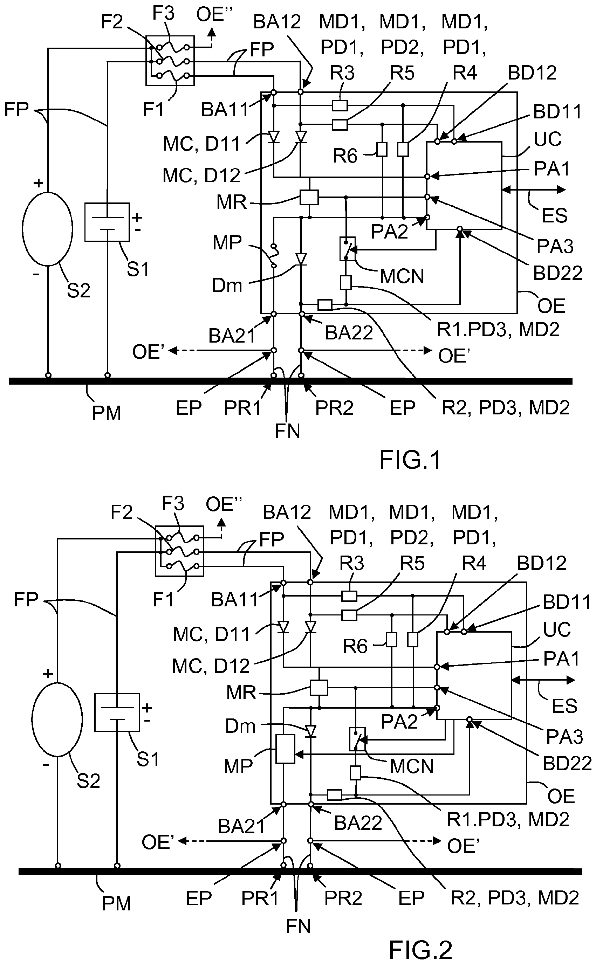

On a schématiquement représenté sur les figures 1 à 3, un exemple d'organe électrique OE selon l'invention (ici un calculateur) couplé électriquement à un circuit d'alimentation redondante.

Ce circuit d'alimentation redondante comprend des première S1 et seconde S2 sources d'énergie électrique, des fusibles Fi (ici i = 1 à 3, ou 1 à 4), au moins quatre fils d'alimentation positive FP, et deux fils d'alimentation négative FN.

La première source d'énergie électrique S1 est par exemple une batterie et la seconde source d'énergie électrique est par exemple un alternateur.

Cette batterie S1 comprend une borne négative reliée à la pièce (de masse) PM, par exemple via une liaison vissée, et une borne positive couplée à des premières bornes des fusibles Fi par l'un des fils d'alimentation positive FP.

De même, l'alternateur S2 comprend une borne négative reliée à la pièce (de masse) PM, par exemple via une liaison vissée, et une borne positive couplée aux premières bornes des fusibles Fi par un autre des fils d'alimentation positive FP.

Comme illustré non limitativement, le circuit d'alimentation redondante peut également comprendre au moins un troisième fusible F3 destiné alimenter positivement un ou plusieurs autres organes électriques OE".

L'organe électrique OE selon l'invention (ici un calculateur) comprend au moins une unité de calcul UC, des première BA11 et seconde BA12 bornes d'alimentation positive, des première BA21 et seconde BA22 bornes d'alimentation négative, des premiers moyens de diagnostic MD1, des seconds moyens de diagnostic MD2, une diode Dm, et des moyens de protection MP.

L'unité de calcul UC est par exemple un microcontrôleur. Mais il pourrait également s'agir d'un microprocesseur ou d'un circuit intégré de type EPLD (« Erasable Programmable Logic Device »), ou analogue. D'une manière générale il s'agit d'un dispositif comportant notamment des entrées/sorties permettant de contrôler l'état du calculateur OE, ainsi qu'un point d'alimentation positive PA1 et un point d'alimentation négative PA2.

On notera, comme illustré non limitativement, que l'unité de calcul UC peut également et éventuellement comprendre au moins une entrée/sortie ES couplée à au moins un organe électrique, comme par exemple un actionneur, un capteur, ou un autre calculateur, pour l'échange de données et/ou de commandes.

La première borne d'alimentation positive BA11 est propre à être couplée à l'un des fusibles Fi (ici le premier F1, qui est couplé aux première S1 et seconde S2 sources d'énergie électrique), via l'un des fils d'alimentation positive FP.

La seconde borne d'alimentation positive BA12 est propre à être couplée à un autre des fusibles Fi (ici le deuxième F2, qui est couplé aux première S1 et seconde S2 sources d'énergie électrique), via un autre des fils d'alimentation positive FP.

La première borne d'alimentation négative BA21 est propre à être couplée à la pièce PM au niveau d'une première prise de masse PM1 (dite principale (ou de signal)), via l'un des fils d'alimentation négative FN.

La seconde borne d'alimentation négative BA22 est propre à être couplée à la pièce PM au niveau d'une seconde prise de masse PM2 (dite secondaire (ou de puissance)), via un autre des fils d'alimentation négative FN.

On notera, comme illustré non limitativement, que ces fils d'alimentation négative FN peuvent éventuellement être couplés, via des épissures EP, à d'autres fils d'alimentation négative FN qui sont connectés à des bornes d'alimentation négative d'un ou plusieurs autres organes électriques OE' (actionneurs ou capteurs ou calculateurs, par exemple).

Les moyens de couplage MC définissent une fonction logique de type « ou » entre les première BA11 et seconde BA12 bornes d'alimentation positive et le point d'alimentation positive PA1, de sorte que ce dernier (PA1) soit alimenté positivement soit via le premier fusible F1, soit via le second fusible F2.

Par exemple, et comme illustré non limitativement, cette fonction logique de type « ou » peut être définie par deux diodes D11 et D12, éventuellement de type Schottky (en raison de la plus faible chute de tension occasionnée). Ces diodes D11 et D22 permettent, d'une part, de protéger le calculateur OE contre une inversion de batterie (c'est-à-dire un branchement de la batterie S1 à l'envers) en bloquant le courant sur ses deux entrées d'alimentation, et, d'autre part, d'assurer une séparation entre les deux lignes d'alimentation du calculateur OE afin d'éviter une réalimentation d'une ligne vers l'autre ou la propagation d'un court-circuit (en effet, en cas de court-circuit à la masse sur la première ligne d'alimentation (principale), le calculateur OE reste alimenté via la seconde ligne d'alimentation (secondaire), et, s'il n'y avait pas ces diodes D11 et D22, un court-circuit sur une ligne d'alimentation se répercuterait sur l'autre ligne d'alimentation).

Les premiers moyens de diagnostic MD1 couplent les première BA11 et seconde BA12 bornes d'alimentation positive à des première BD11 et seconde BD12 bornes de diagnostic d'alimentation positive de l'unité de calcul UC. Ces première BD11 et seconde BD12 bornes de diagnostic d'alimentation positive constituent des entrées logiques de type « tout ou rien » (c'est-à-dire pouvant prendre deux valeurs (0 ou 1).

Par exemple, et comme illustré non limitativement, les premiers moyens de diagnostic MD1 peuvent comporter des premier PD1 et second PD2 ponts diviseurs (ou fonction analogue). Le premier pont diviseur PD1 couple ici la première borne d'alimentation positive BA11 à la première borne de diagnostic d'alimentation positive BD11 et au point d'alimentation négative PA2, et le second pont diviseur PD2 couple ici la seconde borne d'alimentation positive BA12 à la seconde borne de diagnostic d'alimentation positive BD12 et au point d'alimentation négative PA2. Par exemple, le premier pont diviseur PD1 est de type dit « pull down » et comprend une résistance R3 montée entre la première borne d'alimentation positive BA11 et la première borne de diagnostic d'alimentation positive BD11, et une résistance R4 montée entre la première borne de diagnostic d'alimentation positive BD11 et le point d'alimentation négative PA2. Le second pont diviseur PD2 est par exemple de type dit « pull down » et comprend, par exemple, une résistance R5 montée entre la seconde borne d'alimentation positive BA12 et la seconde borne de diagnostic d'alimentation positive BD12, et une résistance R6 montée entre la seconde borne de diagnostic d'alimentation positive BD12 et le point d'alimentation négative PA2.

Il est rappelé qu'un pont diviseur est de type dit « pull down » lorsqu'il comprend une entrée avec une résistance à la masse.

On notera, bien que cela n'apparaisse pas sur les figures 1 à 3, que les premiers moyens de diagnostic MD1 peuvent également et éventuellement comprendre un premier moyen de commutation comprenant une commande électronique d'ouverture couplée à l'unité de calcul UC, une première borne couplée au point d'alimentation négative PA2, et une seconde borne couplée aux premier PD1 et second PD2 ponts diviseurs afin de les alimenter de façon contrôlée. Cette variante de réalisation est particulièrement bien adaptée au cas où l'alimentation est dite directe, et donc permanente, car elle permet, notamment, de limiter la consommation.

La diode Dm couple le point d'alimentation négative PA2 et la seconde borne d'alimentation négative BA22. Cette diode Dm est éventuellement de type Schottky (notamment lorsque les diodes D11 et D12 sont également de type Schottky). Cette diode Dm permet d'éviter la réalimentation par la masse principale des organes électriques consommateurs qui sont normalement alimentés par la masse secondaire, en cas de déconnexion de la masse secondaire entre l'épissure EP qui la distribue et la prise de masse secondaire PR2 (par exemple sur la carrosserie du véhicule).

Les seconds moyens de diagnostic MD2 couplent la seconde borne d'alimentation négative BA22 à une borne de diagnostic d'alimentation négative BD22 de l'unité de calcul UC.

Par exemple, et comme illustré non limitativement, les seconds moyens de diagnostic MD2 peuvent comporter un pont diviseur (ou fonction analogue) PD3 et un second moyen de commutation MCN.

Par exemple, et comme illustré non limitativement, le second moyen de commutation MCN comprend une commande électronique d'ouverture couplée à l'unité de calcul UC, une première borne couplée à une sortie de moyens de régulation MR du calculateur OE pour être alimentée avec une tension choisie régulée, et une seconde borne. Ce second moyen de commutation MCN peut, par exemple, être agencé sous la forme d'un transistor bipolaire ou de type MOS.

Par exemple, et comme illustré non limitativement, les moyens de régulation MR sont couplés aux point d'alimentation positive PA1 et point d'alimentation négative PA2 et agencés de manière à délivrer la tension choisie régulée sur sa sortie qui est préférentiellement couplée à un troisième point d'alimentation positive PA3 de l'unité de calcul UC. Cette tension choisie est par exemple égale à +5 V.

Le pont diviseur PD3 est alimenté de façon contrôlée par l'unité de calcul UC via la seconde borne du second moyen de commutation MCN. Il couple ici la seconde borne d'alimentation négative BA22 à la borne de diagnostic d'alimentation négative BD22. Par exemple, ce pont diviseur PD3 est de type dit « pull up » et comprend une résistance R1 montée entre la borne de diagnostic d'alimentation négative BD22 et la seconde borne du second moyen de commutation MCN, et une résistance R2 montée entre la seconde borne d'alimentation négative BA22 et la borne de diagnostic d'alimentation négative BD22.

Il est rappelé qu'un pont diviseur est de type dit « pull up » lorsqu'il comprend en entrée une résistance alimentée en positif (par exemple +12 V ou +5 V) et, entre cette résistance en entrée et l'unité centrale UC, une résistance en série pour limiter le courant allant vers cette dernière (UC) et éventuellement une autre résistance à la masse à l'entrée de l'unité centrale UC. Ainsi, quand l'entrée du calculateur OE est en circuit ouvert, le pont diviseur, constitué par la résistance « pull up », la résistance en série et la résistance à la masse, permet de limiter la tension en entrée sur l'unité centrale UC à une valeur acceptable pour elle (typiquement < 5 V - V_{entrée UC} = 12 V ^{∗} R3 / (R1+R2+R3)).

On notera que l'unité de calcul UC comprend un algorithme de traitement chargé de détecter les pertes d'alimentation positive ou négative, afin qu'elles puissent être signalées à un usager (ici) du véhicule par un moyen approprié (comme par exemple un signal lumineux ou un message affiché sur un écran).

Les moyens de protection MP assurent un couplage entre le point d'alimentation négative PA2 et la première borne d'alimentation négative BA21. Ils sont agencés pour protéger contre une surintensité non seulement la diode Dm mais également un circuit de l'unité de calcul UC qui est couplé au point d'alimentation négative PA2.

Dans l'exemple de réalisation non limitatif illustré sur la figure 1, les moyens de protection MP comprennent un fusible. Mais ils peuvent être agencés sous d'autres formes. Ainsi, dans l'exemple de réalisation non limitatif illustré sur la figure 2, les moyens de protection MP comprennent un transistor comportant une commande électronique d'ouverture couplée à l'unité de calcul UC, et par exemple de type MOS. Dans d'autres variantes de réalisation, ils pourraient, par exemple, comprendre un disjoncteur thermique ou un disjoncteur électronique passif et à usages multiples (par exemple de type polyswitch®) ou encore un relais bistable comportant une commande électronique d'ouverture couplée à l'unité de calcul UC.

On notera que dans l'exemple de réalisation illustré sur la figure 2, l'algorithme de traitement, qui est chargé de détecter les pertes d'alimentation positive ou négative au sein de l'unité de calcul UC, est également chargé de piloter le transistor MP.

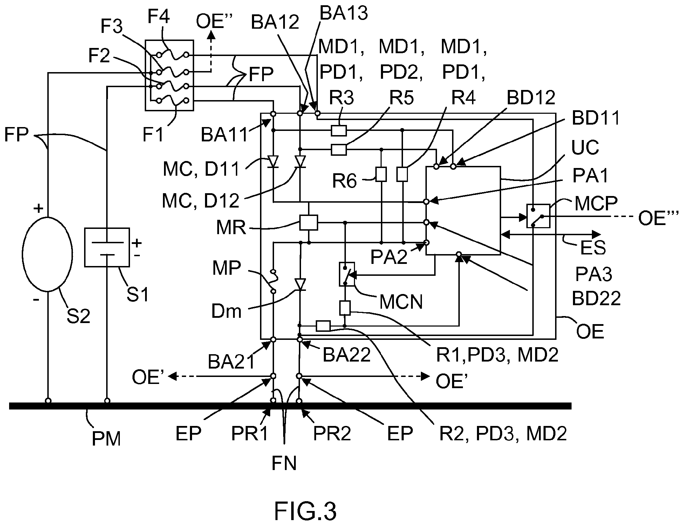

On notera également, comme illustré non limitativement dans l'exemple de réalisation de la figure 3 (qui est une variante de réalisation de la figure 1), que le calculateur OE peut éventuellement comprendre une troisième borne d'alimentation positive BA13 et un moyen de commutation de puissance MCP.

La troisième borne d'alimentation positive BA13 est propre à être couplée à un autre fusible F4 (qui est également couplé aux première S1 et seconde S2 sources d'énergie électrique), via un autre fil d'alimentation positive FP.

Le moyen de commutation de puissance MCP comprend une commande électronique couplée à l'unité de calcul UC, une première borne couplée à la troisième borne d'alimentation positive BA13, une deuxième borne couplée à la seconde borne d'alimentation négative BA22, et une troisième borne propre à être couplée à au moins un autre organe électrique OE'" (comme par exemple un actionneur). Cette troisième borne constitue une sortie de puissance de type « low side » ou de type ½ pont qui nécessite un couplage à la masse de puissance pour alimenter son moyen de commutation de puissance MCP sous le contrôle de l'unité de calcul UC. La masse de puissance est donc ici utilisée comme masse secondaire pour assurer la redondance de la masse de signal PM1.

Il est rappelé qu'une sortie de puissance est de type dit « low side » lorsqu'elle est active à la masse, et donc connectée à une borne d'un actionneur ayant une autre borne connectée à l'alimentation positive (+). Lorsqu'une telle sortie de puissance est commandée, elle fournit à l'actionneur une masse.

Il est également rappelé qu'une sortie de puissance est de type dit « ½ pont » lorsqu'elle est active à la masse ou à l'alimentation positive (+) selon la commande appliquée, et donc connectée à une borne d'un actionneur ayant une autre borne généralement connectée à une autre sortie du même type. Cela permet par exemple avec deux sorties de puissance de ce type de commander un moteur électrique dans les deux sens selon la façon dont on commande les deux sorties de puissance. En effet, si la première sortie de puissance est commandée au + et la seconde sortie de puissance est commandée à la masse, le moteur tourne dans un sens, et si la seconde sortie de puissance est commandée au + et la première sortie de puissance est commandée à la masse, le moteur tourne dans l'autre sens. Une sortie de type « ½ pont » peut être réalisée, par exemple, par un relais à deux positions dans lequel le point milieu est connecté à la sortie et le contact repos à la masse et le contact travail sont connectés au +. En variante, elle peut également être réalisée avec deux transistors reliés entre eux vers la sortie, l'un des deux transistors étant alimenté par le + et l'autre par la masse.

On notera que cette variante du calculateur OE de la figure 1, s'applique également au calculateur OE de la figure 2 (à transistor).

Le principe de fonctionnement de la redondance des masses, permise par l'invention, est décrit ci-après.

Dans l'état nominal (c'est-à-dire sans problème dans le circuit d'alimentation redondante), le calculateur OE est relié aux première PM1 et seconde PM2 prises de masse.

Si les potentiels des deux prises de masse PM1 et PM2 sont très proches, la masse redondée du calculateur OE est alimentée par la première prise de masse (principale ou de signal) PM1 au travers des moyens de protection MP, et la diode Dm n'est pas passante. Seules les diodes D11 et D12 sont présentes, en parallèle, dans le circuit d'alimentation redondante, et donc le fonctionnement en basse tension est équivalent à celui d'un calculateur sans redondance d'alimentation disposant d'une diode de protection contre les inversions de polarité. Le calculateur OE est ainsi optimisé pour fonctionner (ici) lors du démarrage à froid du moteur thermique du véhicule.

En cas de perte de la première masse (principale ou de signal), la masse redondée du calculateur est alimentée par la seconde prise de masse (secondaire ou de puissance) PM2 par l'intermédiaire de la diode Dm. Dans cette situation, les diodes D11 et D12, en parallèle, sont en série avec la diode Dm dans le circuit d'alimentation redondante du calculateur OE, et donc le fonctionnement en basse tension est dégradé par rapport au fonctionnement en mode nominal (c'est-à-dire sans perte de masse). La performance de démarrage à froid (ici) du moteur thermique du véhicule peut être dégradée lorsque la batterie est faiblement chargée ou lorsque la température extérieure est basse mais que le fonctionnement du calculateur OE reste assuré en phase de roulage ou lorsque le moteur thermique est démarré dans des conditions non sévères (démarrage par température tempérée ou redémarrage avec le moteur thermique chaud, par exemple) ; mais la sécurité reste assurée.

Si la perte de la liaison de la première masse (principale ou de signal) est située entre la première prise de masse PM1 et l'épissure EP du fil d'alimentation négative FN, les autres organes électriques OE' couplés à cette épissure EP (calculateurs, capteurs, actionneurs) qui sont normalement alimentés par la première prise de masse PM1 sont alors alimentés par la seconde prise de masse PM2 via la diode Dm et les moyens de protection MP du calculateur OE, ce qui permet de les protéger contre cette perte de masse. Ceci est particulièrement intéressant si ces autres organes électriques OE' participent à des fonctions de sécurité.

Les moyens de protection MP sont calibrés pour assurer la protection de la diode Dm et des pistes et connectiques de masse du calculateur OE en cas de surintensité. Ils permettent, en ouvrant le circuit, d'assurer la protection du calculateur OE en cas de consommation anormale des autres organes électriques OE', OE" (surconsommation, court-circuit sur la partie positive). Le calculateur OE conserve ainsi sa masse redondée et reste opérationnel.

On notera que lorsque les moyens de protection MP comprennent un transistor de type MOS (figure 2) au lieu d'un fusible, la diode intrinsèque (ou diode de structure) du transistor MP joue le rôle de diode de redondance de masse comme dans un schéma classique bien connu de l'homme de l'art. Un dispositif électronique de diagnostic de perte de masse, de mesure de courant et de pilotage du transistor MP permet de commander ce dernier (MP), soit à l'état passant (« ON ») lorsque les deux masses sont présentes et que le calculateur OE est réveillé afin d'avoir une impédance faible et d'optimiser son fonctionnement en basse tension, soit à l'état bloqué (« OFF ») en cas de perte de la première masse et de surintensité supérieure à l'intensité admissible par la diode Dm.

En cas de perte de la seconde masse (secondaire ou de puissance), le calculateur OE reste pleinement opérationnel, hormis sur la sortie de puissance qui est alimentée par la seconde prise de masse PM2 lorsque la masse de puissance est utilisée comme redondance de la première prise de masse PM1. En particulier, les performances en basse tension sont maintenues.

On notera que lorsque la perte de la liaison de masse est située entre la seconde prise de masse PM2 et l'épissure EP du fil d'alimentation négative FN, les autres organes électriques OE' couplés à cette épissure EP (calculateurs, capteurs, actionneurs) perdent leur alimentation négative du fait qu'elle n'est pas redondée, et donc il convient de ne pas placer sur cette masse des calculateurs, capteurs ou actionneurs participant à des fonctions de sécurité.

On notera également que lorsque les moyens de protection MP comprennent un transistor de type MOS (figure 2) au lieu d'un fusible (figure 1), le calculateur OE conserve ses performances en basse tension si le transistor MP est commandé, et les performances en basse tension du calculateur OE sont dégradées en l'absence de commande du transistor MP du fait que le calculateur OE reste alimenté à travers la diode intrinsèque (diode de structure) du transistor MP.

On notera également qu'une redondance d'alimentation n'est réellement utile que si la perte d'une des branches de cette redondance peut être détectée et signalée à l'usager pour qu'il puisse la faire réparer. En effet, en l'absence de détection, une fois une première alimentation perdue suite à une première défaillance, le calculateur OE peut subir une panne totale suite à une seconde défaillance entraînant la perte de la seconde alimentation.

Un exemple non limitatif de fonctionnement du diagnostic de la redondance des masses est décrit ci-après.

L'entrée de diagnostic de perte de la première masse (principale ou de signal) est (ici) réalisée par le pont diviseur PD3, qui est constitué des résistances R1 et R2, alimenté par une tension commutée et dont le point milieu est connecté à la borne de diagnostic d'alimentation négative BD22 (analogique) de l'unité de calcul UC. Cette borne de diagnostic d'alimentation négative BD22 n'est polarisée, via une tension commutée par les moyens de commutation MCN sur ordre de l'unité de calcul UC, que lorsque le calculateur OE est réveillé, pour éviter une consommation inutile en veille.

La tension V_{diag} lue sur la borne de diagnostic d'alimentation négative BD22 répond ici à l'équation V_{diag} + V_{d} = R2 ^{∗} (V_{d} + 5) / (R1 + R2), où V_{d} est la tension aux bornes de la diode Dm et le nombre 5 représente une tension choisie régulée de +5 V fournie par le moyen de régulation MR. On déduit de cette équation la tension V_{diag} : V_{diag} = [(R2 ^{∗} 5) - (R1 ^{∗} V_{d})] / (R1 + R2).

Dans l'état nominal, le calculateur OE est relié aux deux masses (masse principale et masse secondaire, ou masse de signal et masse de puissance). Les potentiels des deux masses étant très proches, on peut considérer en première approximation que l'on a une tension nulle aux bornes de la diode Dm. Par conséquent, la tension V_{diag} lue sur la borne de diagnostic d'alimentation négative BD22 est : Vdiag = (R2 ^{∗} 5) / (R1 + R2).

En cas de perte de la première masse (principale ou de signal) ou en cas de défaillance des moyens de protection MP, la masse redondée du calculateur OE étant reliée à la seconde masse (secondaire ou de puissance) via la diode Dm et servant de référence de masse pour les entrées analogiques de l'unité de calcul UC, elle se trouve décalée de la tension V_{d} (environ 0,6 V à 0,8 V) par rapport à la seconde masse (secondaire ou de puissance). Par conséquent, la tension V_{diag} lue sur la borne de diagnostic d'alimentation négative BD22 est : V_{diag} = [(R2 ^{∗} 5) - (R1 ^{∗} V_{d})] / (R1 + R2).

En cas de perte de la seconde masse (secondaire ou de puissance), le calculateur OE est alimenté par la première masse (principale ou de signal). La résistance R2 du pont diviseur PD3 n'est pas tirée à la masse, et donc la borne de diagnostic d'alimentation négative BD22 est polarisée à +5 V via la résistance R1.

Par exemple, si l'on a R1 = 4,7 KΩ et R2 = 1 KΩ, la tension V_{diag} lue sur la borne de diagnostic d'alimentation négative BD22 est égale à 0,877 V dans l'état nominal, à 0,218 V en cas de perte de la première masse (principale ou de signal), et à +5 V en cas de perte de la seconde masse (secondaire ou de puissance).

L'invention offre plusieurs avantages parmi lesquels :
- une redondance d'alimentation qui suffit à répondre aux besoins minimaux en termes de tenue aux tensions de démarrage d'un moteur thermique. Ainsi, en mode nominal, la tenue de l'organe électrique à la tension de démarrage à froid d'un moteur thermique n'est pas pénalisée par rapport à une solution sans redondance d'alimentation, contrairement à une solution avec redondance complète des alimentations. De même, en mode dégradé (en cas de perte de la masse principale), le fonctionnement de l'organe électrique en roulage avec le moteur thermique tournant ou en redémarrage (hors démarrage à froid où la performance est dégradée par la chute de tension d'une diode) est permis,
- une redondance d'alimentation qui n'induit pas de risque d'incendie en cas de partage de prises de masse avec d'autres organes électriques (ou consommateurs) contrairement à une solution avec une simple équipotentielle de masses électroniques,
- une redondance d'alimentation qui permet d'effectuer de nombreux diagnostics contrairement à une solution avec une simple équipotentielle de masses électroniques,
- une redondance d'alimentation qui permet un gain d'un fil sur le faisceau par rapport à une solution avec une simple équipotentielle de masses électroniques lorsque l'organe électrique possède déjà une masse de puissance qui alimente l'une de ses sorties de type low side ou ½ pont.

## Revendications

1. Organe électrique (OE) à alimentation redondante et comportant des moyens de diagnostic d'alimentation comprenant une unité de calcul (UC) comportant un point d'alimentation positive (PA1) et un point d'alimentation négative (PA2) et apte à contrôler un état de l'organe électrique (OE), des première (BA11) et seconde (BA12) bornes d'alimentation positive propres à être couplées à des fusibles (Fi) couplés à des première (S1) et seconde (S2) sources d'énergie électrique également couplées à une pièce (PM) définissant une masse électrique, des première (BA21) et seconde (BA22) bornes d'alimentation négative propres à être couplées séparément à ladite pièce (PM), des moyens de couplage (MC) définissant une fonction logique de type « ou » entre lesdites première (BA11) et seconde (BA12) bornes d'alimentation positive et ledit point d'alimentation positive (PA1), de sorte que ce dernier (PA1) soit alimenté positivement soit via un premier fusible (F1), soit via un second fusible (F2) et des premiers moyens de diagnostic (MD1) couplant lesdites première (BA11) et seconde (BA12) bornes d'alimentation positive respectivement à des première (BD11) et seconde (BD12) bornes de diagnostic d'alimentation positive de ladite unité de calcul (UC), **caractérisé en ce qu'**il comprend en outre une diode (Dm) couplant ledit point d'alimentation négative (PA2) et ladite seconde borne d'alimentation négative (BA22), des moyens de protection (MP) assurant un couplage entre ledit point d'alimentation négative (PA2) et ladite première borne d'alimentation négative (BA21) et agencés pour protéger contre une surintensité ladite diode (Dm) et un circuit de ladite unité de calcul (UC) couplé audit point d'alimentation négative (PA2), et des seconds moyens de diagnostic (MD2) de la redondance des masses couplant ladite seconde borne d'alimentation négative (BA22) à une borne de diagnostic d'alimentation négative (BD22) de ladite unité de calcul (UC).

2. Organe électrique la revendication 1, **caractérisé en ce que** lesdits moyens de protection (MP) sont choisis dans un groupe comprenant au moins un fusible, un transistor à commande électronique d'ouverture couplée à ladite unité de calcul (UC), un disjoncteur thermique, un disjoncteur électronique passif et à usages multiples, et un relais bistable à commande électronique d'ouverture couplée à ladite unité de calcul (UC).

3. Organe électrique selon l'une des revendications 1 ou 2, **caractérisé en ce que** lesdits moyens de couplage (MC) comportent des diodes (D11, D12) définissant ladite fonction logique de type « ou ».

4. Organe électrique selon la revendication 3, **caractérisé en ce que** lesdites diodes (D11, D12) et/ou ladite diode (Dm) sont de type Schottky.

5. Organe électrique selon l'une des revendications 1 à 4, **caractérisé en ce que** lesdits premiers moyens de diagnostic (MD1) comprennent un premier pont diviseur (PD1) couplant ladite première borne d'alimentation positive (BA11) à ladite première borne de diagnostic d'alimentation positive (BD11) et audit point d'alimentation négative (PA2), et un second pont diviseur (PD2) couplant ladite seconde borne d'alimentation positive (BA12) à ladite seconde borne de diagnostic d'alimentation positive (BD12) et audit point d'alimentation négative (PA2).

6. Organe électrique selon la revendication 5, **caractérisé en ce que** lesdits premiers moyens de diagnostic (MD1) comprennent un premier moyen de commutation comprenant une commande électronique d'ouverture couplée à ladite unité de calcul (UC), une première borne couplée audit point d'alimentation négative (PA2), et une seconde borne couplée auxdits premier (PD1) et second (PD2) ponts diviseurs afin de les alimenter de façon contrôlée.

7. Organe électrique selon l'une des revendications 1 à 6, **caractérisé en ce qu'**il comprend des moyens de régulation (MR) couplés auxdits point d'alimentation positive (PA1) et point d'alimentation négative (PA2) et propres à délivrer une tension choisie sur une sortie, et **en ce que** lesdits seconds moyens de diagnostic (MD2) comprennent, d'une part, un second moyen de commutation (MCN) comprenant une commande électronique d'ouverture couplée à ladite unité de calcul (UC), une première borne couplée à ladite sortie, et une seconde borne, et, d'autre part, un pont diviseur (PD3) alimenté de façon contrôlée via ladite seconde borne du second moyen de commutation (MCN) et couplant ladite seconde borne d'alimentation négative (BA22) à ladite borne de diagnostic d'alimentation négative (BD22).

8. Organe électrique selon l'une des revendications 1 à 7, **caractérisé en ce qu'**il comprend une troisième borne d'alimentation positive (BA13) propre à être couplée à un autre fusible (F4) couplé auxdites première (S1) et seconde (S2) sources d'énergie électrique, un moyen de commutation de puissance (MCP) comprenant une commande électronique couplée à ladite unité de calcul (UC), une première borne couplée à ladite troisième borne d'alimentation positive (BA13), une deuxième borne couplée à ladite seconde borne d'alimentation négative (BA22), et une troisième borne propre à être couplée à au moins un autre organe électrique.

9. Véhicule comprenant une pièce (PM) définissant une masse électrique, et des première (S1) et seconde (S2) sources d'énergie électrique couplées à ladite pièce (PM) et à des fusibles (Fi), **caractérisé en ce qu'**il comprend en outre au moins un organe électrique (OE) selon l'une des revendications précédentes et couplé auxdits fusibles (Fi) et à ladite pièce (PM).

10. Véhicule selon la revendication 9, **caractérisé en ce qu'**il est de type automobile.

## Patentansprüche

1. Elektrischer Körper (OE) mit redundanter Stromversorgung, und der Stromversorgungsdiagnosemittel umfasst, die eine Recheneinheit (UC) umfasst, die einen positiven Versorgungspunkt (PA1) und einen negativen Versorgungspunkt (PA2) umfasst und geeignet ist, um den Zustand des elektrischen Körpers (OE) zu steuern, eine erste (BA11) und eine zweite (BA12) positive Stromversorgungsklemme, die geeignet sind, mit Sicherungen (Fi) gekoppelt zu sein, die mit einer ersten (S1) und einer zweiten (S2) elektrischen Energiequelle gekoppelt sind, die auch an ein Teil (PM) gekoppelt sind, das eine elektrische Masse definiert, eine erste (BA21) und eine zweite (BA22) negative Stromversorgungsklemme, die geeignet sind, separat mit dem Teil (PM) gekoppelt zu sein, Kopplungsmittel (MC), die eine Logik vom Typ "oder" zwischen der ersten (BA11) und der zweiten (BA12) positiven Stromversorgungsklemme und dem positiven Stromversorgungspunkt (PA1) derart definieren, dass dieser Letztere (PA1) positiv entweder über eine erste Sicherung (F1) oder über eine zweite Sicherung (F2) positiv versorgt wird, und erste Diagnosemittel (MD1), die die erste (BA11) und die zweite (BA12) positive Versorgungsklemme jeweils mit einer ersten (BD11) und einer zweiten (BD12) Klemme zur Diagnose der positiven Stromversorgung der Recheneinheit (UC) koppeln, **dadurch gekennzeichnet, dass** er außerdem eine Diode (Dm) umfasst, die den negativen Versorgungspunkt (PA2) und die zweite negative Stromversorgungsklemme (BA22) koppelt, Schutzmittel (MP), die ein Koppeln zwischen dem negativen Versorgungspunkt (PA2) und der ersten negativen Versorgungsklemme (BA21) sicherstellen und eingerichtet sind, um die Diode (Dm) vor einem Überlaststrom, und eine Schaltung der Recheneinheit (UC), die mit dem negativen Versorgungspunkt (PA2) gekoppelt ist, zu schützen, und zweite Diagnosemittel (MD2) der Redundanz der Massen, die die zweite negative Stromversorgungsklemme (BA22) mit einer Diagnoseklemme der negativen Stromversorgung (BD22) der Recheneinheit (UC) koppeln.

2. Elektrischer Körper nach Anspruch 1, **dadurch gekennzeichnet, dass** die Schutzmittel (MP) aus einer Gruppe ausgewählt sind, die mindestens eine Sicherung, einen Transistor mit elektronischer Öffnungssteuerung, die mit der Recheneinheit (UC) gekoppelt ist, einen thermischen Schutzschalter, einen passiven elektronischen Schutzschalter und mit mehrfachen Verwendungen, und ein bistabiles Relais mit elektronischer Öffnungssteuerung, die mit der Recheneinheit (UC) gekoppelt ist, ausgewählt sind.

3. Elektrischer Körper nach einem der Ansprüche 1 oder 2, **dadurch gekennzeichnet, dass** die Kopplungsmittel (MC) Dioden (D11, D12) umfassen, die die logische Funktion vom Typ "oder" definieren.

4. Elektrischer Körper nach Anspruch 3, **dadurch gekennzeichnet, dass** die Dioden (D11, D12) und/oder die Diode (Dm) vom Typ Schottky-Diode sind.

5. Elektrischer Körper nach einem der Ansprüche 1 bis 4, **dadurch gekennzeichnet, dass** die ersten Diagnosemittel (MD1) eine erste Teilerbrücke (PD1) umfassen, die die erste positive Stromversorgungsklemme (BA11) mit der ersten Klemme zur Diagnose positiver Stromversorgung (BD11) und mit dem negativen Stromversorgungspunkt (PA2) koppelt, und eine zweite Teilebrücke (PD2), die die zweite positive Stromversorgungsklemme (BA12) mit der zweiten Klemme zur Diagnose positiver Stromversorgung (BD12) und mit dem negativen Stromversorgungspunkt (PA2) koppelt.

6. Elektrischer Körper nach Anspruch 5, **dadurch gekennzeichnet, dass** die ersten Diagnosemittel (MD1) ein erstes Umschaltmittel umfassen, das eine elektronische Öffnungssteuerung umfasst, die mit der Recheneinheit (UC) gekoppelt ist, eine erste Klemme, die mit dem negativen Stromversorgungspunkt (PA2) gekoppelt ist, und eine zweite Klemme, die mit der ersten (PD1) und der zweiten (PD2) Teilerbrücke gekoppelt ist, um sie gesteuert zu versorgen.

7. Elektrischer Körper nach einem der Ansprüche 1 bis 6, **dadurch gekennzeichnet, dass** er Regulierungsmittel (MR) umfasst, die mit dem positiven Stromversorgungspunkt (PA1) und mit dem negativen Stromversorgungspunkt (PA2) gekoppelt und geeignet sind, eine ausgewählte Spannung auf einem Ausgang zu liefern, und dass die zweiten Diagnosemittel (MD2) einerseits ein zweites Umschaltmittel (MCN), dass eine elektronische Öffnungssteuerung umfasst, die mit der Recheneinheit (UC) gekoppelt ist, eine erste Klemme, die mit dem Ausgang gekoppelt ist, und eine zweite Klemme umfassen, und andererseits eine Teilerbrücke (PD3), die auf gesteuerte Art über die zweite Klemme des zweiten Umschaltmittels (MCN) versorgt ist und die zweite negative Stromversorgungsklemme (BA22) mit der Klemme zur Diagnose einer negativen Stromversorgung (BD22) koppelt.

8. Elektrischer Körper nach einem der Ansprüche 1 bis 7, **dadurch gekennzeichnet, dass** er eine dritte positive Stromversorgungsklemme (BA13) umfasst, die geeignet ist, um mit einer anderen Sicherung (F4), die mit der ersten (S1) und der zweiten (S2) Quelle elektrischer Energie gekoppelt ist gekoppelt zu sein, ein Leistung Umschaltmittel (MCP), das eine elektronische Steuerung umfasst, die mit der Recheneinheit (UC) gekoppelt ist, eine erste Klemme, die mit der dritten Klemme positiver Stromversorgung (BA13) gekoppelt ist, eine zweite Klemme, die mit der zweiten Klemme negativer Stromversorgung (BA22) gekoppelt ist, und eine dritte Klemme, die geeignet ist, um mit mindestens einem anderen elektrischen Körper gekoppelt zu sein.

9. Fahrzeug, das ein Teil (PM) umfasst, das eine elektrische Masse definiert, und eine erste (S1) und eine zweite (S2) Quelle elektrischer Energie, die mit dem Teil (PM) und mit Sicherungen (Fi) gekoppelt sind, **dadurch gekennzeichnet, dass** es außerdem einen elektrischen Körper (OE) nach einem der vorstehenden Ansprüche umfasst und der mit den Sicherungen (Fi) und dem Teil (PM) gekoppelt ist.

10. Fahrzeug nach Anspruch 9, **dadurch gekennzeichnet, dass** es vom Typ Automobil ist.

## Claims

1. An electric body (OE) with a redundant power supply and comprising power diagnostic means including a computing unit (UC) comprising a positive power point (PA1) and a negative power point (PA2) and able to monitor a status of the electric body (OE), first (BA11) and second (BA12) positive power terminals suitable to be coupled to fuses (Fi) coupled to first (S1) and second (S2) sources of electrical energy also coupled to a part (PM) defining an electrical ground, first (BA21) and second (BA22) negative power terminals suitable to be coupled separately to said part (PM), coupling means (MC) defining a logic function of the "or" type between said first (BA11) and second (BA12) positive power terminals and said positive power point (PA1), such that the latter (PA1) is supplied positively either via a first fuse (F1), or via a second fuse (F2) and first diagnostic means (MD1) coupling said first (BA11) and second (BA12) positive power terminals respectively to first (BD11) and second (BD12) positive power diagnostic terminals of said computing unit (UC), **characterized in that** it furthermore includes a diode (Dm) coupling said negative power point (PA2) and said second negative power terminal (BA22), protection means (MP) ensuring a coupling between said negative power point (PA2) and said first negative power terminal (BA21) and arranged to protect said diode (Dm) against an overcurrent and a circuit of said computing unit (UC) coupled to said negative power point (PA2), and second diagnostic means (MD2) of the redundancy of the grounds coupling said second negative power terminal (BA22) to a negative power diagnostic terminal (BD22) of said computing unit (UC).

2. The electric body according to Claim 1, **characterized in that** said protection means (MP) are selected from a group including at least one fuse, an opening transistor with electronic control coupled to said computing unit (UC), a thermal circuit breaker, a passive and multipurpose electronic circuit breaker, and a bistable opening relay with electronic control coupled to said computing unit (UC).

3. The electric body according to one of Claims 1 or 2, **characterized in that** said coupling means (MC) comprise diodes (D11, D12) defining said logic function of the "or" type.

4. The electric body according to Claim 3, **characterized in that** said diodes (D11, D12) and/or said diode (Dm) are of the Schottky type.

5. The electric body according to one of Claims 1 to 4, **characterized in that** said first diagnostic means (MD1) include a first divider bridge (PD1) coupling said first positive power terminal (BA11) to said first positive power diagnostic terminal (BD11) and to said negative power point (PA2), and a second divider bridge (PD2) coupling said second positive power terminal (BA12) to said second positive power diagnostic terminal (BD12) and to said negative power point (PA2).

6. The electric body according to Claim 5, **characterized in that** said first diagnostic means (MD1) include a first switching means including an electronic opening control coupled to said computing unit (UC), a first terminal coupled to said negative power point (PA2), and a second terminal coupled to said first (PD1) and second (PD2) divider bridges so as to supply them in a controlled manner.

7. The electric body according to one of Claims 1 to 6, **characterized in that** it includes regulating means (MR) coupled to said positive power point (PA1) and negative power point (PA2) and suitable to deliver a selected voltage on an output, and **in that** said second diagnostic means (MD2) include, on the one hand, a second switching means (MCN) including an electronic opening control coupled to said computing unit (UC), a first terminal coupled to said output, and a second terminal, and, on the other hand, a divider bridge (PD3) supplied in a controlled manner via said second terminal of the second switching means (MCN) and coupling said second negative power terminal (BA22) to said negative power diagnostic terminal (BD22).

8. The electric body according to one of Claims 1 to 7, **characterized in that** it includes a third positive power terminal (BA13) suitable to be coupled to another fuse (F4) coupled to said first (S1) and second (S2) sources of electrical energy, a power switching means (MCP) including an electronic control coupled to said computing unit (UC), a first terminal coupled to said third positive power terminal (BA13), a second terminal coupled to said second negative power terminal (BA22), and a third terminal suitable to be coupled to at least one other electric body.

9. A vehicle including a part (PM) defining an electric ground, and first (S1) and second (S2) sources of electrical energy coupled to said part (PM) and to fuses (Fi), **characterized in that** it furthermore includes at least one electric body (OE) according to one of the preceding claims and coupled to said fuses (Fi) and to said part (PM).

10. The vehicle according to Claim 9, **characterized in that** it is of the automobile type.
